Europäisches Patentamt

European Patent Office

Office européen des brevets

(11) Publication number: **0 280 341**
**A1**

## EUROPEAN PATENT APPLICATION

(21) Application number: 88200070.6

(22) Date of filing: 18.01.88

(51) Int. Cl.⁴ **E21B 43/26**

(30) Priority: 06.02.87 US 11758

(43) Date of publication of application:
31.08.88 Bulletin 88/35

(84) Designated Contracting States:
DE FR GB IT NL

(71) Applicant: PUMPTECH N.V.
Atlantic House Noorderlaan 147 Bus 5C
B-2030 Antwerpen(BE)

(84) DE GB IT NL

(71) Applicant: COMPAGNIE DES SERVICES
DOWELL SCHLUMBERGER
20, rue Jean-Jaurès
F-92800 Puteaux(FR)

(84) FR

(72) Inventor: Brannon, Harold D.
588 E. 135th PL. S.
Glenpool Oklahoma 74033(US)

(74) Representative: Richebourg, Michel François
et al
Etudes et Fabrication Dowell Schlumberger
Z.I. Molina La Chazotte B.P. 90
F-42003 Saint-Etienne Cédex 1(FR)

(54) Fracturing fluid slurry concentrate and method of use.

(57) A fracturing fluid slurry concentrate comprising a hydrophobic solvent base (e.g. diesel no. 2), a suspension agent (e.g., organophilic clay), a surfactant (e.g., ethyoxylated nonyl phenol), and hydratable polymer (e.g., hydroxypropyl guar). Such a polymer slurry concentrate when admixed with water at the proper pH, will readily disperse and hydrate, thus producing a high viscosity fracturing fluid. The fracturing fluid slurry concentrate and method are useful in producing large volumes of high viscosity treating fluids at the well site on a continuous basis.

EP 0 280 341 A1

# FRACTURING FLUID SLURRY CONCENTRATE AND METHOD OF USE

## BACKGROUND OF THE INVENTION

1. Field of the Invention:

This invention relates to fracturing fluid slurry concentrates and method of using such slurry concentrates in a continuous process for supplying fracturing fluids for hydraulic fracturing of subterranean formations. More specifically, the invention relates to the use of a polymer slurry comprising a polymer dispersed in a hydrophobic solvent in combination with a suspension agent and a surfactant.

2. Description of the Prior Art:

High viscosity fracturing fluids are often formulated using dry additives which are mixed with water or other aqueous fluids at the job site. Such commercial mixing procedures are known to involve inherent problems, particularly on remote sites or when large volumes are required. For exmple, special equipment for mixing the dry additives with water is required and problems such as chemical dusting, uneven mixing, lumping of the gels while mixing and extended preparation and mixing time are involved. The mixing and physical handling of large quantities of dry chemicals require a great deal of manpower, and when continuous mixing is required, the accurate and efficient handling of dry chemicals is extremely difficult. Also, with respect to batch mix applications, the occurrence of job delays can result in the deterioration of premixed gels and potential loss thereof as well as chemical losses due to tank bottoms and problems associated with the cost of pretreatment tank clean up.

## SUMMARY OF THE INVENTION

The present invention provides a fracturing fluid concentrate which utilizes a stable, pumpable, high concentration polymer slurry. The fracturing fluid concentrate according to the present invention, in a volume sufficient to deliver the desired polymer loading when admixed with water at the proper pH, will readily disperse and hydrate, yielding a large volume of high viscosity treating fluid. As such, the composition and method of use according to the present invention avoid many of the previous problems associated with batch processing of conventional fracturing fluid. The fracturing fluid concentrates are viewed as being applicable to both batch mix and continuous mix porcedures.

Thus, the present invention provides a fracturing fluid concentrate comprising:
(a) from about 40 to 70 parts by weight of a hydrophobic solvent;
(b) from about 60 to about 30 parts by weight of a hydratable polymer;
(c) from about 0.5 to about 3.0 parts by weight of a suspension agent; and
(d) from about 0.2 to about 5.0 parts by weight of a surfactant.

The method of producing a fracturing fluid for hydraulic fracturing of subterranean formations according to the present invention comprises the steps of:
(a) preparing a fracturing fluid concentrate comprising:
(i) from about 40 to 70 parts by weight of a hydrophobic solvent;
(ii) from about 60 to about 30 parts by weight of a hydratable polymer;
(iii) from about 0.5 to about 3.0 parts by weight of a suspension agent;
(iv) from about 0.2 to about 5.0 parts by weight of a surfactant; and
(b) admixing said fracturing fluid concentrate with an effective amount of water, thus producing upon hydration of the hydratable polymer a high viscosity fracturing fluid.

In one particularly preferred embodiment of the present invention, the hydratable polymer is a hydroxypropyl guar and the suspension agent is an organophilic clay, while the surfactant is a non ionic such as an ethoxylated nonyl phenol or an ethylene oxide propylene oxide copolymer. Preferably, these materials are suspended and dispersed in a hydrophobic solvent such as diesel no. 2 by either admixing the dry powder before dispersing in the hydrophobic fluid base or in the alternative, adding the suspension agent and surfactant to the hydrophobic solvent base before admixing the polymer.

It is an object of the present invention to provide a fracturing fluid slurry concentrate that when admixed with water or aqueous brine will produce a high viscosity fracturing fluid. It is a further object of the present invention to provide such a fracturing fluid slurry concentrate that is characterized by polymer loading in excess of at least 30% by weight up to about 60% by weight. It is still a further object of the present invention that the polymer slurry concentrate be highly stable, affording prolonged storage at the well site, and rapidly hydratable, affording continuous production of the desired high viscosity fracturing fluid again at the well site. It is an additional object of the present invention that the polymer slurry concentrate and resulting high viscosity fracturing fluid be compatible with other conventional fracturing fluid additives. Fulfillment of these objects and the presence and fulfillment of additional objects will become apparent upon complete reading of the specification and claims.

## DESCRIPTION OF THE PREFERRED EMBODIMENTS

The fracturing fluid concentrate and method of using the same according to the present invention involve a stable, pumpable, high concentration polymer slurry. The slurry is made up of four necessary ingredients; namely, a hydratable polymer, a hydrophobic solvent base, a suspension agent, and a surfactant. The term high concentration according to the present invention refers to polymer loading of the fracturing fluid concentrate at weight levels in excess of 30% and typically approaching 60%. The term pumpable for purposes of this invention refers to the lack of significant viscosity buildup in the fracturing fluid concentrate over a wide temperature range. The term stable refers to the fracturing fluid concentrate according to the present invention exhibiting minimal polymer separation and no polymer packing for sustained periods of time, typically in excess of a week or more.

Although the present invention is not viewed as being dependent on any single explanation or theory, and as such any proposed explanation is not to be viewed as unduly limiting, the operability of the stable, pumpable, high concentration polymer slurry can be viewed as involving a hydratable polymer dispersed in a hydrophobic fluid.

As such, the dispersion of hydrophilic, hydratable polymer which in an aqueous media would inherently result in a buildup of viscosity, in a hydrophobic environment results in minimum viscosity rise. Consequently, the fracturing fluid concentrate according to the present invention remains readily pumpable and builds viscosity only upon admixing with water, aqueous brine or the like. The suspension agent is present to maintain the polymer in a highly dispersed and suspended state within the hydrophobic fluid without significant settling or separation of polymer. This is achieved by virtue of the suspension agent's thioxtropic behavior in the hydrophobic fluid. The surfactant is necessary to wet the suspension agent for dispersion in the hydrophobic solvent and for removing the hydrocarbon from the polymer particles upon admixing the concentrate to the aqueous phase when making the final high viscosity fracturing fluid.

The hydrophobic solvent or solvent base according to the present invention can generally be any fluid that will dissolve and/or suspend a dispersion of the suspension agent, surfactant, and hydratable polymer wherein the rate of hydration of the polymer is retarded. As such, the hydrophobic solvent base can be selected from the group consisting of any of the non-volatile aliphatic and aromatic hydrocarbons and mixtures thereof as generally known in the art. This would include by way of example, but not limited thereto: kerosene; mineral oil; crude oil; crude oil distillates; vegetable oils; silicone oils; halogenated solvents; ester alcohols; primary, secondary and tertiary alcohols of 6-12 carbons; glycol ethers; glycols, such as polypropylene glycol of formula weight greater than 1000; animal oils; and turpentine. Preferably, diesel fuel is employed as the hydrophobic solvent base.

The hydratable polyer according to the present invention is essentially any polymer or mixture of polymers as generally known in the art which yield viscosity (i.e., produce a viscosity rise) upon hydration. Thus, the polymers useful in the present invention include, by way of example, but not limited thereto, any water soluble natural or synthetic polymers including polysaccharides and related polymeric materials such as guar, hydroxypropyl guar (HPG), carboxymethyl dryoxypropyl guar, carboxymethyl hydroxyethyl cellulose, other cellulostics and cellulostic derivatives, polyacrylamides, and similar biopolymers and mixtures thereof, Preferable, the hydratable polymer to be used according to the present invention is HPG.

The suspension agent used according to the present in vention can be generally any thixotropic agent for the hydrophobic solvent base. This would include by way of example, but not limited thereto, an organophilic clay, hydroxylalkyl cellulose, hydroxyalkyl-alkyl cellulose, fine meshed fumed silicas, mixtures thereof and the like.

Preferably, the suspension agent to be employed in the present invention is a highly dispersible organophilic clay, such as the commercially available material sold under the trade name BENTONE SD-1. The suspension agent is to be present in the concentrate at an amount from about 0.5 to about 3.0% by weight. At concentrations below the lower limit of this range, undesirable polymer settling will be observed, while concentrations above the range will result in an unpumpable slurry. The most preferred suspension agent concentration is from about 1.0 to about 1.5% by weight of the concentrate.

The surfactant or dispersant useful according to the present invention is generally any such material that is capable of both wetting the suspension agent for dispersion in the hydrophobic solvent and stripping the hydrocarbon from the polymer particles upon introduction into the water to allow hydration of the polymer. As such, this would include by way of example, but not limited thereto, ethyoxylated nonyl phenol, alkyloxylated alcohols having polymerized propylene oxide and/or ethylene oxide, other copolymers of propylene oxide and ethylene oxide or the like, glycol ethers, various derivatives thereof and mixtures. The surfactant is preferably an ethoxylated nonyl phenol employed at a concentration of about 0.2 to about 5.0% by weight of the concentrate. Employing a surfactant at a concentration below the lower limit results in polymer packing.

To further illustrate the invention, the following Examples are presented, demonstrating various aspects and features of the novel compositions and associated methods according to the present invention.

EXAMPLE

In order to illustrate a typical fracturing fluid concentrate according to the present invention, the following components were employed to produce a slurry as follows:

| Component | Quantity Per 1000 Gal. Slurry | Weight % |
|---|---|---|
| Diesel No. 2 | 630 gal. | 48.4 |
| Organophilic Clay | 100 lbs. | 1.1 |
| Ethoxylated Nonylphenol | 5 gal. | 0.5 |
| Hydroxypropyl Guar | 4500 lbs. | 50.0 |

Initially, the diesel No. 2 was placed in an appropriate tank and the ethoxylated nonylphenol surfactant was added with mild agitation. The organophilic clay suspension agent was then added with further agitation of sufficient shear to be dispersed and activated. The hydroxypropyl guar polymer was then added slowly and mixed until a uniform slurry resulted.

The hydration rate of the resulting fracturing fluid concentrate was then measured using a model 35 fann viscometer with a number 1 spring, standard bob and rotor at 100 rpm at room temperature. At time zero the concentrate was diluted with water at a dilution corresponding to 9 gallons of concentrate per thousand gallons of water, which is equivalent to about 40 pounds of polymer per thousand gallons of water. The aqueous water phase employed involved deionized water containing 1% by weight potassium chloride adjusted to approximately pH = 6.0, using fumaric acid. The apparent viscosity was measured as a function of time and is presented in the following TABLE I representative of the hydration rate of the fracturing fluid concentrate.

TABLE I

| Time (minutes) | 1 | 2 | 3 | 5 | 10 |
|---|---|---|---|---|---|
| Apparent Viscosity (cp) | 36 | 52 | 67 | 73 | 73 |

In order to evaluate the stability of the concentrate, a portion of the above fracturing fluid concentrate was stored at 25 C for 28 days. The settling, packing and response to agitation was periodically observed. The resulting observations are presented in TABLE II.

## TABLE II

| Time (days) | Settling | Packing | Agitation Required To Resuspend |
|---|---|---|---|
| initial | none | none | none |
| 0.5 | none | | none |
| 1 | none | | none |
| 2 | 1% | | very minimal |
| 4 | 2% | | very minimal |
| 7 | 2% | | minimal |
| 14 | 3% | none | minimal |
| 28 | 5% | 1% | moderate |

After the 28 day storage period, the hydration rate of the concentrate was again measured in the manner previously described. The resulting data are presented in TABLE III.

## TABLE III

| Time (minutes) | 1 | 2 | 3 | 5 | 10 |
|---|---|---|---|---|---|
| Apparent Viscosity (cp) | 35 | 51 | 65 | 73 | 73 |

From the above EXAMPLE I, it can be concluded that a fracturing fluid slurry concentrate, consisting of hydroxypropyl guar suspended in diesel No.2 at relatively high polymer loading of 50% by weight and using an organophilic clay and ethoxylated nonylphenol as the suspension agent/surfactant, readily disperses and rapidly hydrates when admixed to a 1% KCl brine having the pH adjusted to 6 by use of an organic acid. It is further concluded that the slurry concentrate is extremely stable over a duration measured in terms of several weeks requiring only moderate agitation to reverse settling and packing of the polymer without altering the rate of hydration.

EXAMPLE II

In order to demonstrate and evaluate the methods of preparing the fracturing fluid concentrates and the subsequent formation of the high viscosity fracturing fluid according to the present invention, a total of 90 barrels of slurried fracturing fluid concentrate was made in a stirred 45 barrel tank by the following two procedures. In each 45 barrel batch, the component formulation as present in EXAMPLE I was employed using differing admixing sequences as follows:

Procedure A

1. Load 1120 gallons of diesel No. 2 into the tank (clean and dry).
2. With the paddles turning at low speed, add 9 gallons ethyoxylated nonyl phenol and 180 pounds organophilic clay.
3. Close the hatch. Agitate with paddles at high speed for 30 minutes.
4. Slow paddles to low speed. Add 8000 pounds hydroxypropyl guar.
5. Close the hatch. Agitate at medium speed for 10 minutes.
6. Sample.

Procedure B

1. Load 1120 gallons of diesel No. 2 into the tank (clean and dry).

2. With paddles turning at low speed, add 8000 pounds of a dry blend of HPG, organophilic clay and surfactant.

3. Close the hatch. Agitate at high speed for 40 minutes.

4. Stop agitator and sample.

Static suspension stability observations were then performed on each of the 45 barrel batches produced by the two procedures, A and B. The resulting data are presented in TABLE IV.

TABLE IV

|                    | Procedure A | Procedure B |
|--------------------|-------------|-------------|
| Mixing Time, min   | 40          | 40          |
| Free Oil, 24 hr.   | 2.1%        | 1.9%        |
| Settling, 24 hr.   | none        | none        |
| Packing, 24 hr.    | none        | none        |

Additional observations, including slurry viscosity and consistency and the viscosified yield of the resultant fracturing fluid, indicated that the handling characteristics and performance of slurries made by the two procedures were essentially the same.

EXAMPLE III

A field test of the fracturing fluid slurry concentrate was performed on a well located in Zapata County, Texas. The test involved formulating 45 barrels of slurried fracturing fluid concentrate similar to procedure B of EXAMPLE II employing a preblend of the polymer, suspension agent and surfactant, using the component blend of EXAMPLE I. The fracturing fluid slurry concentrate was used to continuously mix 6000 barrels of high viscosity fracturing fluid, which was subsequently crosslinked to form a gelled fluid used to perform a hydraulic fracturing treatment. The treatment was successfully completed, placing 1.4 MM pounds of proppant in the formation.

In view of the above, the difference between the present invention and the prior art and the benefits and advantages of the present invention are considered numerous and significant. For example, the present invention differs from the prior art in that pourable/pumpable polysaccharide polymer slurries are achieved at polymer concentrations up to about 60% by weight. The invention further differs from the prior art in that the use of hydrophobic solvents eliminate the need to inhibit the hydration of the polysaccharide polymer. The advantages of the present invention further involve the production of polymer concentrates that are highly stable for sustained periods of time under oil field conditions exhibiting minimal settling and packing both of which are readily reversed with moderate agitation. The polymer slurry concentrates also readily disperse and hydrate at rates superior to hydration of HPG or other polysaccharid polymer individually. The polymer slurry concentrates according to the present invention also yield more consistent gels with fewer manhours expended while the blending and subsequent hydration to form the fracturing fluid can be performed on location at the well site. The use of the polymer slurry concentrate according to the present invention further avoids or alleviates problems and hazards associated with handling large quantities of dry polymers on location. And the loss or deterioration of the fracturing fluid associated with on site delay or interruption are virtually eliminated.

Having thus described the invention with a certain degree of particularity, it is to be understood that the invention is not limited to the embodiments set forth herein for purposes of exemplification, but is to be limited only by the scope of the attached claims, including a full range of equivalents to which each element thereof is entitled.

## Claims

1. A fracturing fluid concentrate comprising:
   (a) from about 40 to about 70 parts by weight of a hydrophobic solvent;
   (b) from about 60 to about 30 parts by weight of a hydratable polymer;
   (c) from about 0.5 to about 3.0 parts by weight of a suspension agent; and
   (d) from about 0.2 to about 5.0 parts by weight of a surfactant.

2. A fracturing fluid concentrate of Claim 1 wherein said hydrophobic solvent is present from about 45 to about 55 parts by weight and said hydratable polymer is present from about 55 to about 45 parts by weight.

3. A fracturing concentrate of Claim 2 wherein said hydratable polymer is selected from the group consisting of guar, hydroxypropyl guar, carboxymethyl hydroxypropyl guar, carboxymethyl hydroxyethyl cellulose, polyacrylamide or derivatives and mixtures thereof.

4. A fracturing fluid concentrate of Claim 2 wherein said hydratable polymer is hydroxypropyl guar.

5. A fracturing fluid concentrate of Claim 4 wherein said surfactant is an ethyoxylated nonyl phenol or an ethylene oxide propylene oxide copolymer.

6. A fracturing fluid concentrate comprising:
   (a) for every 1 part by weight of a carrier fluid consisting of:
   (i) a hydrophobic solvent,
   (ii) a suspension agent, and
   (iii) a surfactant,
   (b) an excess of about 0.3 parts by weight and up to about 1.5 parts by weight of a hydratable polymer.

7. A fracturing fluid concentrate of Claim 6 wherein said suspension agent is an organophilic clay and said hydratable polymer is hydroxypropyl guar.

8. A method of producing a fracturing fluid for hydraulic fracturing of subterranean formations comprising the steps of:
   (a) preparing a fracturing fluid concentrate comprising:
   (i) from about 40 to about 70 parts by weight of a hydrophobic solvent;
   (ii) from about 60 to about 30 parts by weight of a hydratable polymer;
   (iii) from about 0.5 to about 3.0 parts by weight of a suspension agent; and
   (iv) from about 0.2 to about 5.0 parts by weight of a surfactant.

9. A method of producing a fracturing fluid of Claim 8 wherein said preparing of the fracturing fluid concentrate further comprises the steps of:
   (a) preblending said suspension agent, surfactant and hydratable polymer as a dry powder blend; and
   (b) subsequently admixing said dry powder blend to said hydrophobic solvent base.

10. A method of producing a fracturing fluid of Claim 8 wherein said preparing of the fracturing fluid concentrate further comprises the steps of:
   (a) admixing said suspension agent and said surfacent to said hydrophobic solvent base; and
   (b) subsequently admixing said hydratable polymer to said admixture of said hydrophobic solvent base, suspension agent and surfactant.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 084 225 (U.C.C.)<br>* Claims 1-13,25-27 *<br>----- | 1-10 | E 21 B 43/26 |

**TECHNICAL FIELDS SEARCHED (Int. Cl.4)**

E 21 B

The present search report has been drawn up for all claims

| Place of search | Date of completion of the search | Examiner |
|---|---|---|
| THE HAGUE | 23-06-1988 | ROTSAERT L.D.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P0401)